Europäisches Patentamt

European Patent Office

Office européen des brevets

(11) Publication number: **0 142 312**
**A2**

(12) **EUROPEAN PATENT APPLICATION**

(21) Application number: **84307454.3**

(22) Date of filing: **29.10.84**

(51) Int. Cl.⁴: **B 32 B 31/28**

(30) Priority: **05.11.83 GB 8329593**

(43) Date of publication of application:
**22.05.85 Bulletin 85/21**

(84) Designated Contracting States:
**AT BE CH DE FR GB IT LI LU NL SE**

(71) Applicant: **REED INTERNATIONAL P.L.C.**
**83, Piccadilly**
**London, W1A 1EJ(GB)**

(72) Inventor: **Salim, Mohammed Sharif**
**10 Wheland Avenue**
**Bury Lancashire(GB)**

(74) Representative: **Medlock, Edwin Roy**
**10 Victoria Road Grappenhall**
**Warrington, WA4 2EN(GB)**

(54) **Laminating transparent film to a base.**

(57) Clear film is laminated to a base such as paper, paper-like materials, plastics and board through the medium of an adhesive which is curable by ultra-violet or electron-beam radiation. The adhesive is irradiated through the clear film to cure it in the absence of oxygen excluded by the act of bringing the film and base together. High solids adhesives with low viscosity and a high flash point are preferred such as methacrylates and dimethacrylates.

EP 0 142 312 A2

## LAMINATING TRANSPARENT FILM TO A BASE

This invention relates to laminate adhesives and is concerned with adhesives for laminating film transparent to ultra-violet radiation and high energy electron beam to a base such as paper, paper-like materials, plastics and board.

It is known in the packaging and book cover manufacturing fields, to laminate clear plastics film (such as orientated poly-propylene or polyester) to printed paper or board to give a bright, durable and clear product. The known process involves using a solvent or water-based adhesive (30% - 50% solids) which is applied to the film and then subjected to infra-red heating to evaporate the solvent or water base and initiate curing. The film is then applied to the paper or board and curing is allowed to become complete.

This process involves the dispersal or recovery of solvents (which may be environmentally troublesome, or hazardous, or costly) or water: a relatively high consumption of energy per unit area of laminate: and relatively slow (15 - 30 metres/min) production rate.

The process according to the invention, on the other hand, can use adhesives having high solids (approaching 100%) and hence no solvent problems; is curable by radiation (such as ultra-violet or electron beam) and hence involves a lower power consumption; and has a relatively high (50 - 100 metres/min) production rate dependent on the number of radiation sources employed.

The invention is based on the appreciation that, whilst U.V. curable adhesives are well-known they tend to be slow in curing as atmospheric oxygen acts as an inhibitor, nevertheless, when used in the limited context of laminating film to a base it is now appreciated that they are fast in curing because the curing can be arranged to take place in a substantially oxygen free environment merely by the simple act of bringing the film and base together.

The invention accordingly resides in a process for laminating film transparent to ultra-violet radiation and high energy electron beams to paper, paper-like materials, plastics, or board characterised in that the adhesive selected for use is one which is slow curing by said radiation or beams in the presence of oxygen but faster curing in the absence of oxygen to give a non-yellowing cured product, and the curing takes place by radiation through the film in the absence of oxygen excluded by the act of bringing the film and base together.

Preferred adhesives have very high solids (even 100%) and they are of low viscosity such as 2.5 cps at 21$^{\circ}$C.
Typical adhesives are methacrylates and dimethacrylates
incorporating non-yellowing photoinitiators and flow
additives and supplementary acrylates (such as unsaturated
urethane, polyester and epoxy acrylates).  Such adhesives
have the added advantage of a high flash point (typically
in excess of 95$^{\circ}$C).  Adhesives having substantially lower
than 100% solids can be used but may require a preheating
such as by infra-red.  The adhesives proposed are currently
recommended for use in rubber compounding and as improvers
such as in PVC plastisols, cast acrylic sheet and the dental
industry.

In one way of carrying the invention into effect for
making book cover material, orientated poly-propylene clear
film having a thickness of 13 $\mu$ is brought into contact
at a roller having a peripheral speed of 30 - 100 metres/
min with a printed board having a thickness of 300 - 600 $\mu$
and a coating of triethylene glycol dimethacrylate incor-
porating 1-hydroxycyclohexylphenyl ketone as photoinitiator,
and unsaturated urethane acrylate, polyester acrylates and
epoxy acrylates.  After the laminating process at the roller
the laminate is passed below two medium pressure mercury
ultra-violet lamps so that radiation passes through the
film and effects curing of the adhesive.

The invention, when used with high solids (typically 95 - 100%), provides a process which is faster than any known process, avoids waste, avoids volatiles, avoids flash problems, and is non-toxic. Equipment used can be compact as no long infra-red furnaces are required and the product is of high brightness, durability and clarity.

CLAIMS

1. A process for laminating film transparent to ultra-violet radiation and high energy electron beams to a base such as paper, paper-like materials, plastics and board characterised in that the adhesive selected for use is one which is slow curing by said radiation or beams in the presence of oxygen but faster curing in the absence of oxygen to give a non-yellowing cured product, and the curing takes place by radiation through the film in the absence of oxygen excluded by the act of bringing the film and base together.

2. A process as claimed in claim 1 in which the adhesive has 95 - 100% solids.

3. A process as claimed in claim 2 in which the adhesives are of low viscosity such as 2.5 cps at $21^{\circ}$C.

4. A process as claimed in claim 3 in which the adhesives are methacrylates or dimethacrylates having a flash point in excess of $95^{\circ}$C.